# EUROPÄISCHE PATENTSCHRIFT

(11) **EP 1 284 374 B1**
(45) Veröffentlichungstag und Bekanntmachung des Hinweises auf die Patenterteilung: **14.12.2005**
(21) Anmeldenummer: 02017425.6
(22) Anmeldetag: 03.08.2002
(51) Int. Cl.: F16H 7/12, A01D 34/76, A01D 34/68

(54) **Spanneinrichtung und Arbeitsgerät, insbesondere Mähwerk**
Tensioning device and working machine, in particular a lawn mower
Dispositif de tension et machine de travail, particulièrement une tondeuse à gazon

(30) Priorität: 07.08.2001 US 923738
(43) Veröffentlichungstag der Anmeldung: 19.02.2003
(73) Patentinhaber: DEERE & COMPANY, Moline, Illinois 61265-8098 (US)
(72) Erfinder: Buss, Steven Henry, Horicon, WI 53032 (US); Smith, Todd Lynn, Beaver Dam, WI 53916 (US)
(74) Vertreter: Lau-Loskill, Philipp

(56) Entgegenhaltungen:
- EP-A- 0 038 233
- DE-C- 272 011
- DE-C- 399 094
- GB-A- 1 143 961
- GB-A- 1 327 693
- US-A- 4 213 288

## Beschreibung

Die Erfindung betrifft eine Spanneineinrichtung mit den Merkmalen des Oberbegriffs von Anspruch 1, wie sie aus der DE-C-272011 oder GB-A-1327693 bekannt sind. Die Erfindung betrifft weiter ein Arbeitsgerät in Form eines Mähwerks.

Arbeitsgeräte, insbesondere solche, welche in der Rasen-, Garten- und Grundstückspflege eingesetzt werden, wie beispielsweise Mähwerke, sind häufig mit Zugmittelgetrieben ausgestattet, um rotierende Arbeitsmittel, wie Mähmesser, anzutreiben. Solche Zugmittelgetriebe weisen Zugmittelscheiben, um welche ein Zugmittel, meist in der Art eines Riemens geschlungen ist, sowie eine Spanneinrichtung auf, um das Zugmittel gespannt zu halten, so dass eine angemessene Kraftübertragung gegeben ist und das Zugmittel sicher auf den Zugmittelscheiben gehalten wird. Eine solche Spanneinrichtung weist üblicherweise einen federbelasteten Spannarm auf, auf dem wenigstens eine an dem Zugmittel angreifende Spannrolle angeordnet ist.

Gelegentlich kann während des Betriebs auf das Zugmittel durch die Zugmittelscheiben eine stärkere Belastung ausgeübt werden. Diese Situation tritt auf, wenn die Arbeitsmittel bzw. die Mähmesser des Arbeitsgerätes oder Mähwerks auf ein Hindernis treffen und/oder stark abgebremst werden. Solche Belastungen führen dazu, dass das Zugmittel an der Spannrolle und dem Spannarm derart stark zieht, dass es zu einem sogenannten Peitschen oder Flattern des Zugmittels und einem Abspringen des Zugmittels von einer oder mehreren der Zugmittelscheiben kommen kann.

Um diesem Verhalten entgegenzuwirken, weisen bekannte Spanneinrichtungen einen Anschlagmechanismus auf, welcher mit einem Spannarm zusammenwirkt, um das Zugmittel daran zu hindern, sich von den Zugmittelscheiben zu lösen. Derartige bekannte Anschläge wirken mit der auf dem Spannarm angeordneten Spannrolle zusammen. Dies macht ein Entfernen oder Austauschen der Spannscheibe schwierig und erfordern häufig, dass auch weitere Bauteile, wie beispielsweise der Anschlag, abgebaut werden müssen, bevor das Zugmittel entfernt oder ausgetauscht werden kann.

Die US-A-5,769,747 zeigt einen mit einer Spannrolle versehenen Spannarm, der eine Federanordnung aufweist, welche nicht nur eine Vorspannung auf das Zugmittel ausübt, sondern eine Bewegung des Spannarms in einer Richtung derart blockiert, dass einem starken Entspannen des Zugmittels und somit einem Abspringen desselben von den Zugmittelscheiben entgegengewirkt wird.

Die GB-A-1 327 693 zeigt ein Zugmittelgetriebe mit einer Spannrolle und einem Riemen, der durch einen unelastischen feste Anschlag, der über einen Hebel an der Spannrolle angreift, vorgespannt wird.

Die DE-B-272 011 zeigt eine Spanneinrichtung für einen Riementrieb mit einer auf einen Riemen wirkenden Spannscheibe, wobei eine Vorspannung des Riemen durch einen verstellbaren Anschlag aufrechterhalten wird.

Das der Erfindung zugrunde liegende Problem wird darin gesehen, dass bekannte Spanneinrichtungen eine Vielzahl von Teilen aufweisen, aufwändig in der Montage sind und es für eine Bedienungsperson häufig notwendig ist, sich Zugang zu einer Unterseite eines Arbeitsgerätes, an dem eine solche Spanneinrichtung angebracht ist, zu verschaffen, um die Spanneinrichtung an- und abbauen zu können.

Dieses Problem wird erfindungsgemäß durch die Lehre der Patentansprüche 1 bzw. 8 gelöst, wobei in den weiteren Patentansprüchen die Lösung in vorteilhafter Weise weiterentwickelnde Merkmale aufgeführt sind.

Auf diese Weise wird eine Spanneinrichtung zur Verfügung gestellt, die eine Bewegung des Spannarms durch einen Anschlag begrenzt, indem der Spannarm mit dem Anschlag bei einer starken Entspannung des Zugmittels in Kontakt tritt. Eine solche Anordnung weist nur eine geringe Teileanzahl auf und ist einfach in der Herstellung und Wartung.

Weist der Spannarm eine Verbreiterung auf, die mit dem Anschlag zusammenwirken kann, so kann der Anschlag derart von dem Spannarm bzw. der Spannrolle beabstandet sein, dass das Zugmittel zu Wartungszwecken oder zum Austausch leicht von der Spannrolle entfernt bzw. an dieser angebracht werden kann, ohne dass es zu Behinderungen durch den Anschlag kommt.

Dies kann dadurch begünstigt werden, dass die Verbreiterung in der Art eines von dem Spannarm abstehenden Arms ausgebildet ist. Ist dieser im Bereich der Spannrolle angeordnet und erstreckt er sich über deren Radius hinaus, so wird sichergestellt, dass der Arm der Spannrolle vorauseilt und somit, dass der Arm unabhängig von der Anordnung bzw. Höhe des Anschlages zuerst mit diesem zusammentrifft. Auf diese Weise wird zwischen der Spannrolle und dem Anschlag zumindest ein Mindestabstand aufrechterhalten, durch den ein Abnehmen/Anbringen des Zugmittels erleichtert wird

Um einem ruckartigen Aufeinandertreffen des Anschlags und des Spannarms bzw. des Arms entgegenzuwirken, kann der Anschlag in der Art eines Dämpfers ausgebildet sein bzw. einen solchen aufweisen. Als Dämpfer kann beispielsweise eine dämpfende Auflage, beispielsweise aus elastischem Kunststoff oder einem anderen geeigneten Material, oder eine Federeinrichtung etc. dienen.

Wird der Spannarm auf eine Achse aufgesetzt, so kann er von dieser abgenommen werden, ohne dass die Achse von dem Arbeitsgerät getrennt werden muss. Die Achse kann mit dem Arbeitsgerät somit fest verbunden, beispielsweise verschweißt sein. Die Achse ist abgesetzt ausgeführt, so dass der Spannarm durch den Absatz der Achse auf dieser in Längsrichtung ohne die Verwendung weiterer Sicherungsmittel in einer Richtung festgelegt und kann darüber hinaus einfach wieder abgenommen werden.

Eine axiale Sicherung kann durch ein Sicherungsmittel erfolgen, dass in einfacher Art und Weise als ein Federring ausgeführt sein kann. Es ist aber auch die Verwendung anderer Sicherungsmittel bzw. von Sicherungsstiften etc. denkbar. Um den Spannarm und mögliche weitere auf der Achse aufgesetzte Teile zu entfernen, muss nur dass Sicherungsmittel und im Anschluss der Spannarm bzw. der/die weitere(n) Bauteil(e) abgenommen werden.

Besonders einfach in der Ausführung ist es, wenn der Spannarm durch eine Feder belastet wird, um die notwendige Spannung in dem Zugmittel zu erzeugen. Diese Feder kann direkt an dem Spannarm angreifen. Eine einfache Montage/Demontage wird aber begünstigt, wenn die Feder an einem mit dem Spannarm zusammenwirkenden Halter angreift.

Derartige Spanneinrichtungen können an Arbeitsgeräten, welche an Fahrzeugen zur Rasen-, Garten- und Grundstückspflege, eingesetzt werden. Bei solchen Arbeitsgeräten kann es sich beispielsweise um Kehreinrichtungen etc. handeln. Besonders geeignet ist aber der Einsatz an Mähwerken, insbesondere an Sichelmähwerken, welche um im Wesentlichen vertikale Drehachsen umlaufende Mähmesser oder Mähbalken aufweisen, da hier die Gefahr eines Auftreffens der Arbeitsmittel bzw. der Mähmesser auf Hindernisse, wie Steine, Wurzeln etc. besonders groß ist.

In der Zeichnung ist ein nachfolgend näher beschriebenes Ausführungsbeispiel der Erfindung dargestellt. Es zeigt:
- Fig. 1: eine perspektivische Ansicht eines als Mähwerk ausgebildeten Arbeitsgeräts mit einer Spanneinrichtung,
- Fig. 2: eine Explosionsdarstellung der Spanneinrichtung,
- Fig. 3: eine vergrößerte Teilansicht des Arbeitsgeräts aus Fig. 1, wobei die Spanneinrichtung ihre Betriebsstellung einnimmt, und
- Fig. 4: eine Teilansicht entsprechend Fig. 3, wobei ein Spannarm der Spanneinrichtung an einem Anschlag anliegt.

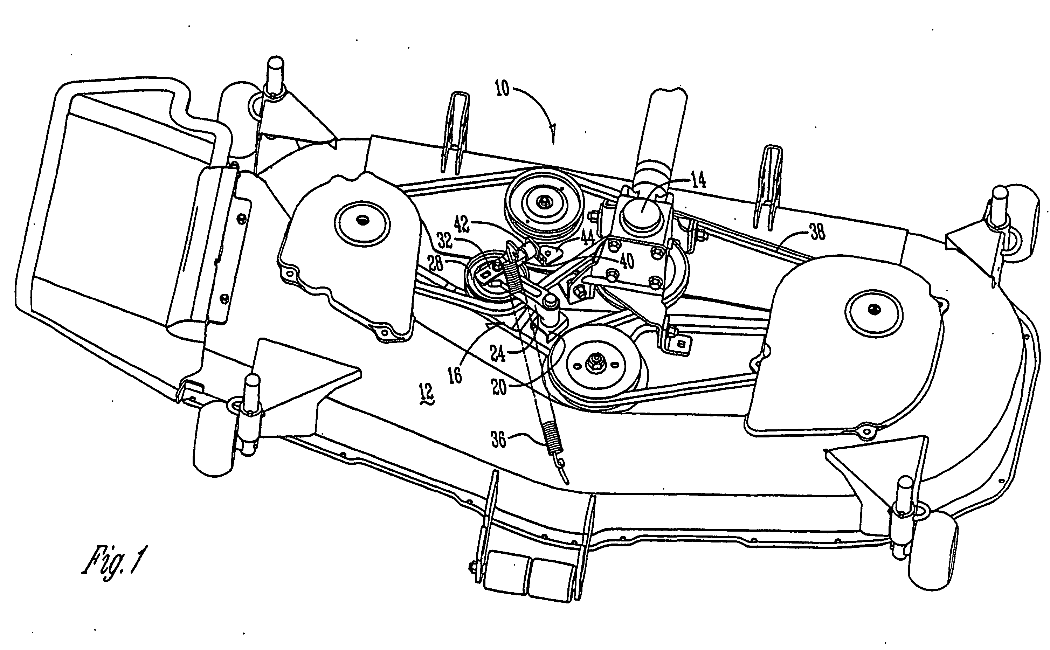

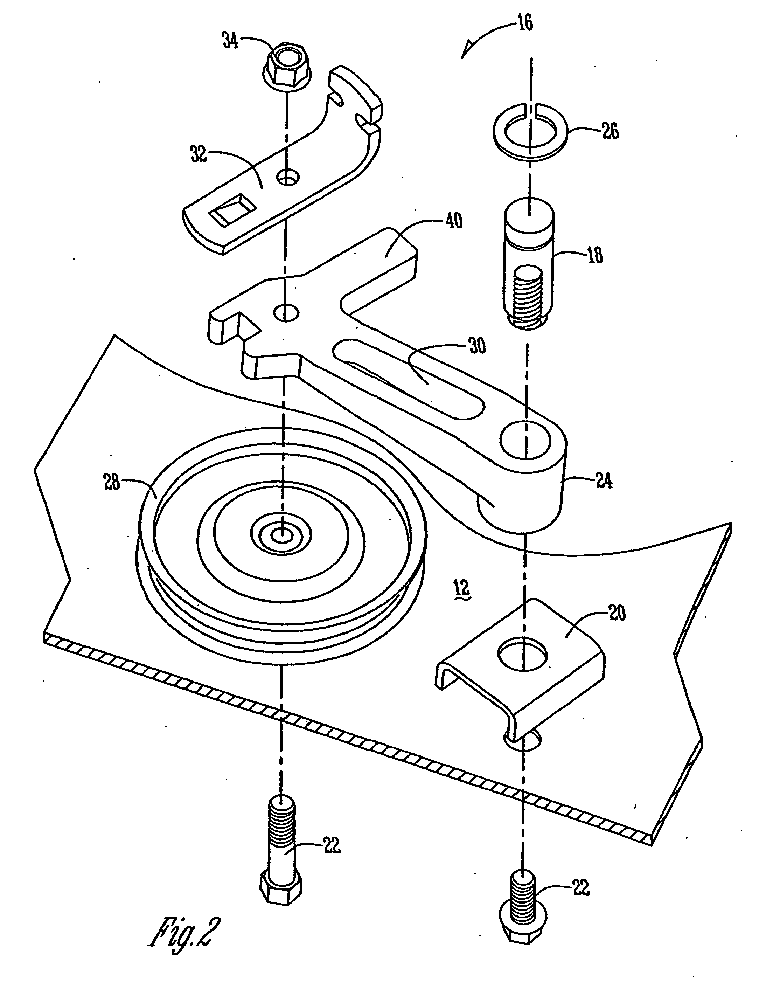

Es wird zuerst auf Fig. 1 Bezug genommen, in der ein Mähwerk bzw. ein Arbeitsgerät 10 mit einem Gehäuse 12 gezeigt wird. Auf einer Oberseite des Gehäuses 12 ist eine Getriebebaugruppe bzw. ein Zugmittelgetriebe angeordnet, das von einer Fahrzeugantriebsquelle, wie einer Kurbelwelle oder einem Getriebe angetrieben wird und wiederum einen Antriebsriemen bzw. ein Zugmittel 38 antreibt. Das Zugmittel 38 wird durch eine Spanneinrichtung 16 gespannt. Allgemein wird die Spanneinrichtung 16, wie es in Fig. 2 dargestellt wird, zusammengesetzt. Eine abgesetzte Achse 18 wird durch eine Stützkonsole 20 gesteckt, um ein als Schraube ausgeführtes Sicherungsmittel 22 durch das Gehäuse 12 aufzunehmen. Ein Spannarm 24 wird dann auf der abgesetzten Achse 18 auf die Stützkonsole 20 aufgesetzt. Ein als Federring ausgebildetes Sicherungsmittel 26 hält den Spannarm 24 in einer passenden Stellung auf der abgesetzten Achse 18. Die abgesetzte Achse 18 bildet die vertikale Drehachse des Spannarms 24.

An einem der Drehachse des Spannarms 24 abgelegen Stelle ist eine Spannrolle 28 an dem Spannarm 24 durch eine Schraube oder ein anderes Sicherungsmittel 22 drehbar gesichert. Das Sicherungsmittel 22 nimmt auch einen federbelasteten Halter 32 auf und wird durch eine Sicherungsmutter an seinem Platz gehalten. Wie aus Figur 2 ersichtlich, weist der Spannarm 24 eine Erweiterung, Verbreiterung bzw. einen Arm 40 auf. Der Arm 40 steht von dem Hauptkörper des Spannarms 24 über den Radius der Spannrolle 28 hinaus ab.

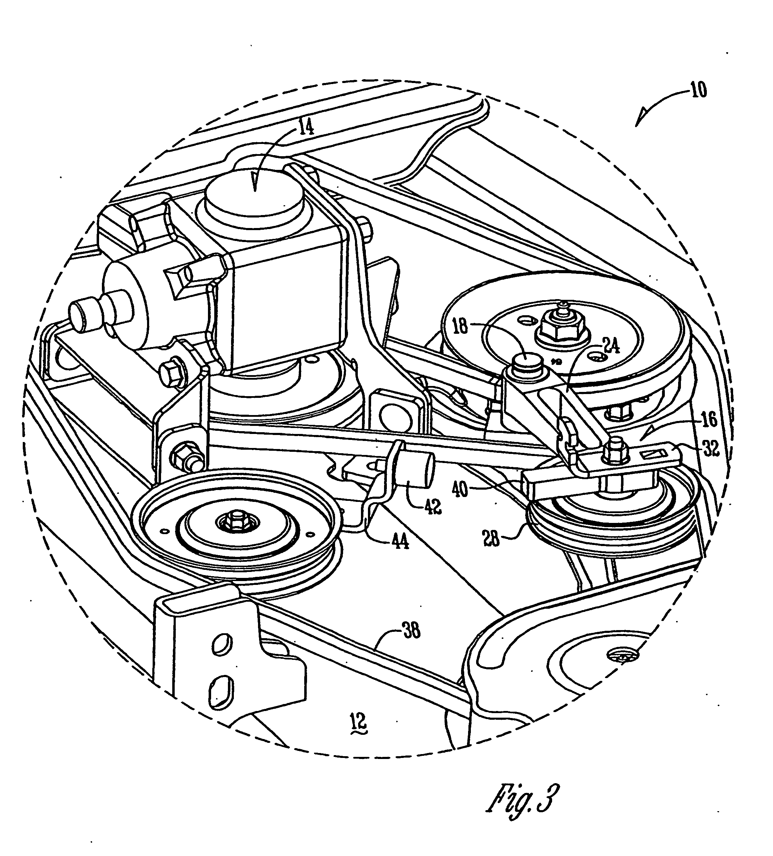

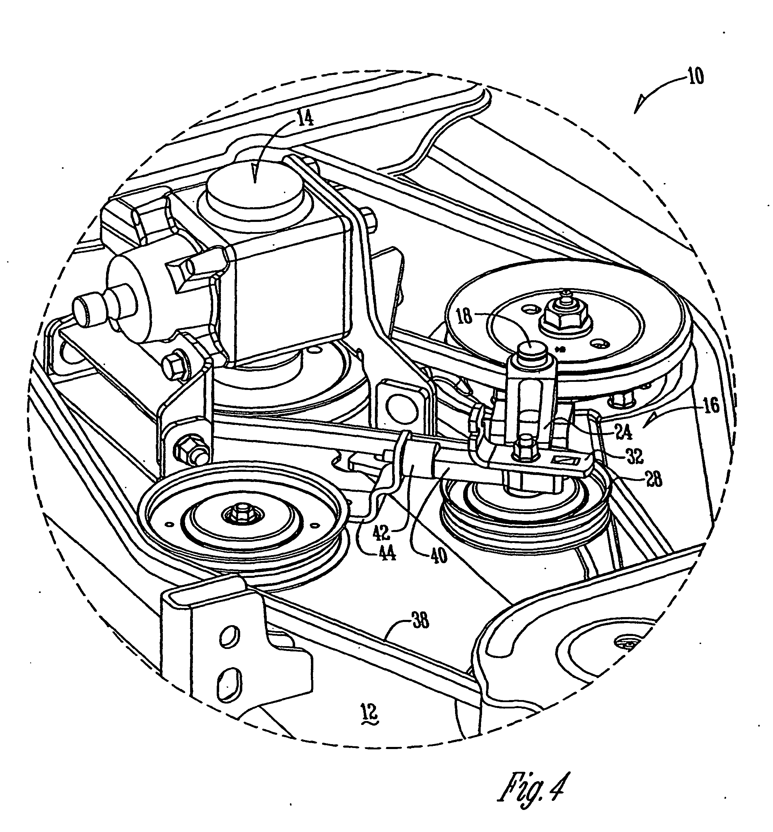

Wie es in den Figuren 3 und 4 dargestellt wird, berührt der Arm 40 des Spannarms 24 einen Dämpfer bzw. Anschlag 42 jenseits des Radius der Spannrolle 28. Der Anschlag 42 ist an dem Arbeitsgerät 10 über einen Anschlaghalter 44 gesichert, welcher an dem Arbeitsgerät 10 angeschweißt oder anderweitig befestig ist. Im Betrieb ist eine Feder 36 an dem federbelasteten Halter 32 der Spanneinrichtung 16 angebracht. Die Feder 36 bewirkt, dass der Spannarm 24 um die abgesetzte Achse 18 dreht, die Spannrolle 28 gegen das Zugmittel 38 zieht und dabei die notwendige Spannung in dem Zugmittel 38 aufrechterhält.

Um das Zugmittel 38 zu entfernen, ist es auch notwendig, die Spanneinrichtung 16 zu entfernen. Um die Spanneinrichtung 16 zu entfernen, wird die Feder 36 von dem federbelasteten Halter 32 gelöst, wodurch der Spannarm 24 den Anschlag 42 berührt, wie dies in Figur 3 dargestellt wird. Das Sicherungsmittel 26 kann dann einfach entfernt werden, wodurch es einer Bedienungsperson erlaubt wird, die gesamte Spanneinrichtung 16, ohne die abgesetzte Achse 18, weg von dem Arbeitsgerät 10 abzuheben. Dies erlaubt es der Bedienungsperson, das Zugmittel 38 und/oder die Spanneinrichtung 16 zu ersetzen oder zu entfernen, ohne einen Zugang zu einer Unterseite des Arbeitsgeräts 10 zu haben.

## Patentansprüche

1. Spanneinrichtung (16), insbesondere für ein Mähwerk (10), für wenigstens ein Zugmittel (38) eines Zugmittelgetriebes, mit einem Spannarm (24), mit einer Spannrolle (28), welche drehbar mit dem Spannarm (24) verbunden ist und von dem Zugmittel (38) umschlungen werden kann, wobei die Spanneinrichtung (16) eine Vorspannung auf das Zugmittel (38) ausübt, und mit einem Anschlag (42), **dadurch gekennzeichnet, dass** der Spannarm (24) in seiner Betriebsstellung von dem Anschlag beabstandet ist und eine Bewegung des Spannarms (24) bei einer starken Entspannung des Zugmittels (38) durch ein Auftreffen des Spannarms (24) auf den Anschlag (42) begrenzt wird.

2. Spanneinrichtung nach Anspruch 1, **dadurch gekennzeichnet, dass** der Spannarm (24) ein Verbreiterung aufweist, die mit dem Anschlag (42) zusammenwirken kann.

3. Spanneinrichtung nach Anspruch 2, **dadurch gekennzeichnet, dass** die Verbreiterung in der Art eines von dem Spannarm (24) abstehenden Arms (40) ausgebildet ist, der im Bereich der Spannrolle (24) angeordnet ist und sich über deren Radius hinaus erstreckt.

4. Spanneinrichtung nach einem oder mehreren der vorherigen Ansprüche, **dadurch gekennzeichnet, dass** der Anschlag (42) in der Art eines Dämpfers ausgebildet ist bzw. einen solchen aufweist.

5. Spanneinrichtung nach einem oder mehreren der vorherigen Ansprüche, **dadurch gekennzeichnet, dass** der Spannarm (24) auf einer abgesetzten Achse (18) drehbar aufgesetzt ist.

6. Spanneinrichtung nach Anspruch 5, **dadurch gekennzeichnet, dass** der Spannarm (24) auf der Achse (18) lösbar vorgesehen und mittels eines Sicherungsmittels (26), beispielsweise in der Art eines Federrings, gesichert wird.

7. Spanneinrichtung nach einem oder mehreren der vorherigen Ansprüche, **dadurch gekennzeichnet, dass** der Spannarm (24) durch eine Feder (36) belastet wird, welche an einem mit dem Spannarm (24) zusammenwirkenden Halter (32) angreift.

8. Arbeitsgerät (10) in Form eines Mähwerks mit einer Spanneinrichtung (16) nach einem oder mehreren der vorherigen Ansprüche.

## Claims

1. A tensioning device (16), especially for a mower mechanism (10), for at least one means (38) acting in tension of a tension means drive, with a tensioning arm (24), with a tensioning roller (28) which is rotatably attached to the tensioning arm (24) and about which the means (38) acting in tension can wrap, wherein the tensioning device (16) exerts a pre-tension on the means (38) acting in tension, and with a stop (42), **characterized in that** the tensioning arm (24) is spaced from the stop in its operating position and movement of the tensioning arm (24) in the event of marked relaxation of the means (38) acting in tension is limited by the tensioning arm (24) striking the stop (42).

2. A tensioning device according to claim 1, **characterized in that** the tensioning arm (24) has a widened part which can cooperate with the stop (42).

3. A tensioning device according to claim 2, **characterized in that** the widened part is in the form of an arm (40) projecting from the tensioning arm (24), disposed in the region of the tensioning roller (28) and extending beyond its radius.

4. A tensioning device according to one or more of the preceding claims, **characterized in that** the stop (42) is in the form of or comprises a buffer.

5. A tensioning device according to one or more of the preceding claims, **characterized in that** the tensioning arm (24) is rotatably fitted on a shouldered axle (18).

6. A tensioning device according to claim 5, **characterized in that** the tensioning arm (24) is releasably provided on the axle (18) and is secured by a securing means (26), for example in the form of a spring ring.

7. A tensioning device according to one or more of the preceding claims, **characterized in that** the tensioning arm (24) is loaded by a spring (36) which engages on a bracket (32) cooperating with the tensioning arm (24).

8. An implement (10) in the form of a mower mechanism with a tensioning device (16) according to one or more of the preceding claims.

## Revendications

1. Dispositif de tension (16), en particulier pour un mécanisme de coupe (10), pour au moins un moyen de traction (38) d'une transmission pour moyen de traction, avec un bras de mise en tension (24), avec une poulie de tension (28), qui est reliée rotative avec le bras de mise en tension (24) et autour de laquelle peut s'enrouler le moyen de traction (38), le dispositif de tension (16) exerçant une précontrainte sur le moyen de traction (38), et avec une butée (42), **caractérisé en ce que** le bras de mise en tension (24), dans sa position de service, est situé à distance de la butée et un mouvement du bras de mise en tension (24), au moment d'une forte détente du moyen de traction (38), est limité par le heurt du bras de mise en tension (24) contre la butée (42).

2. Dispositif de tension selon la revendication 1, **caractérisé en ce que** le bras de mise en tension (24) comporte un élargissement qui peut coopérer avec la butée (42).

3. Dispositif de tension selon la revendication 2, **caractérisé en ce que** l'élargissement est conçu sous la forme d'un bras (40), en saillie sur le bras de mise en tension (24), lequel est agencé dans la zone de la poulie de tension (24) et s'étend au-delà du rayon de celle-ci.

4. Dispositif de tension selon une ou plusieurs des revendications précédentes, **caractérisé en ce que** la butée (42) est conçue sous forme d'amortisseur ou est muni d'un tel amortisseur.

5. Dispositif de tension selon une ou plusieurs des revendications précédentes, **caractérisé en ce que** le bras de mise en tension (24) est monté rotatif sur un axe (18) étagé.

6. Dispositif de tension selon la revendication 5, **caractérisé en ce que** le bras de mise en tension (24) est prévu amovible sur l'axe (18) et est bloqué par un moyen de sécurité (26), tel qu'une bague à ressort.

7. Dispositif de tension selon une ou plusieurs des revendications précédentes, **caractérisé en ce que** le bras de mise en tension (24) est sollicité par un ressort (36), qui entre en contact avec une bride de support (32) coopérant avec le bras de mise en tension (24).

8. Machine de travail (10) en forme de mécanisme de coupe, comportant un dispositif de tension (16) selon une ou plusieurs des revendications précédentes.
